Europäisches Patentamt

European Patent Office

Office européen des brevets

(19)

(11) Publication number: **0 100 244**
**A2**

# (12) EUROPEAN PATENT APPLICATION

(21) Application number: **83304379.7**

(22) Date of filing: **28.07.83**

(51) Int. Cl.³: **B 65 D 59/06**

(30) Priority: **28.07.82 GB 8221840**

(43) Date of publication of application: **08.02.84**
**Bulletin 84/6**

(84) Designated Contracting States: **DE FR GB IT SE**

(71) Applicant: **Mainsforth Engineering Ltd., Mainsforth Road, Ferryhill Co. Durham, DL17 9DE (GB)**

(72) Inventor: **Satterthwaite, Iain Henry Richardson, Newlands 24 Low Coniscliffe, Darlington Co. Durham, DL2 2JY (GB)**

(74) Representative: **Robinson, Anthony John Metcalf et al, Kilburn & Strode 30 John Street, London, WC1N 2DD (GB)**

(54) **Pipe protectors.**

(57) A pipe protector (1) having a top wall and at least one side wall (7, 8) can be fitted over the end of a pipe to protect it during transit. The pipe protector is substantially annular but has a small gap (2) and means to vary the distance between the two ends (3, 4). The means may be in the form of a spring (5) or clamp, or an inverted tooth wedge if the gap is to be increased. Alternatively or additionally there may be tangs, dimples or projections (6) on at least one of the inner surfaces of the top wall or side wall to improve resistance to accidental removal of the pipe protector.

1.

PIPE PROTECTORS

This invention relates to pipe protectors.

When pipes are transported from their point of manufacture to their point of use the ends of the pipes are vulnerable and can be easily damaged. This is particularly so for larger pipes of a diameter in the region of 0.5 to 1 m.

According to a first aspect of the present invention a pipe protector comprises a member having a top wall and at least one side wall adaptable to form a substantially annular member and means to hold the pipe protector in position on a pipe.

According to a second aspect of the present invention a pipe protector according to the first aspect of the present invention in which there is a small gap in the annular member and the means to hold the pipe protector in position comprises means to vary the distance between the ends of the annulus when fitted to the ends of a pipe.

Such a device may conveniently be made of metal and provides a pipe protector which is secure, resistant to accidental removal and can be readily fitted by one person without the need for complicated tools. The manufacture of the present pipe protector is simple and readily adapted to various pipes. The shape of the channel cross section can be suitably selected, for example right angled, radiused or bevelled or other shape, depending on the profile of the pipe edge the pipe protector is to protect, and the usage of and degree of protection required.

The means may be a spring or toggle action clamp, an inverted tooth wedge or a wedge or cam action clamp.

When the friction action is on the outside wall of the pipe protector/pipe interface the ends of the annulus of the pipe protector are drawn together i.e. the gap is reduced. When the friction action is on the inside wall of the pipe protector/pipe interface the ends of the annulus of the pipe protector are held apart i.e. the gap is held open.

The means to vary the distance between the ends of the annulus may conventionally be in the form of a spring or toggle action clamp or an inverted tooth wedge if the friction action is to be applied to the outside wall of the annulus at the pipe protector/ pipe interface or may conveniently be in the form of a wedge or cam action clamp if the friction action is on the inner interface.

According to a third aspect of the present invention a pipe protector according to the first or second aspects of the present invention in which the means comprise means on at least one of the inner surfaces of the top wall or side wall to improve the resistance to removal of the pipe protector once it has been fitted to the pipe. The means according to the third aspect of the present invention produce a restraining friction action to resist accidental removal of the pipe protector. The construction of such a pipe protector allows for tolerance in diameter, wall thickness and ovality of the pipe it is to be used to protect. The means may be in the form of tangs, punched protrusions or dimples. The means may alternatively or additionally be a friction producing material which is bonded or otherwise secured to at least one of the inner surface of the top wall or side wall.

3.

The present invention therefore also extends to a combination of the second and third aspects of the present invention. Such is the case in a preferred embodiment.

The invention may be put into practice in various ways but two pipe protectors embodying the invention will now be described by way of example with reference to the accompanying drawings, in which:

Figure 1 is a plan view of a pipe protector;

Figure 2 is a section of the pipe protector of Figure 1 taken along the line I-I of Figure 1;

Figure 3 is a section of the pipe protector of Figures 1 and 2 taken along the line II-II of Figure 1;

Figure 4 is a plan view of a second pipe protector;

Figure 5 is a section of the second pipe protector of Figure 4 taken along the line IV-IV of Figure 4; and

Figure 6 is a plan view of a tooth wedge as shown in Figures 4 and 5.

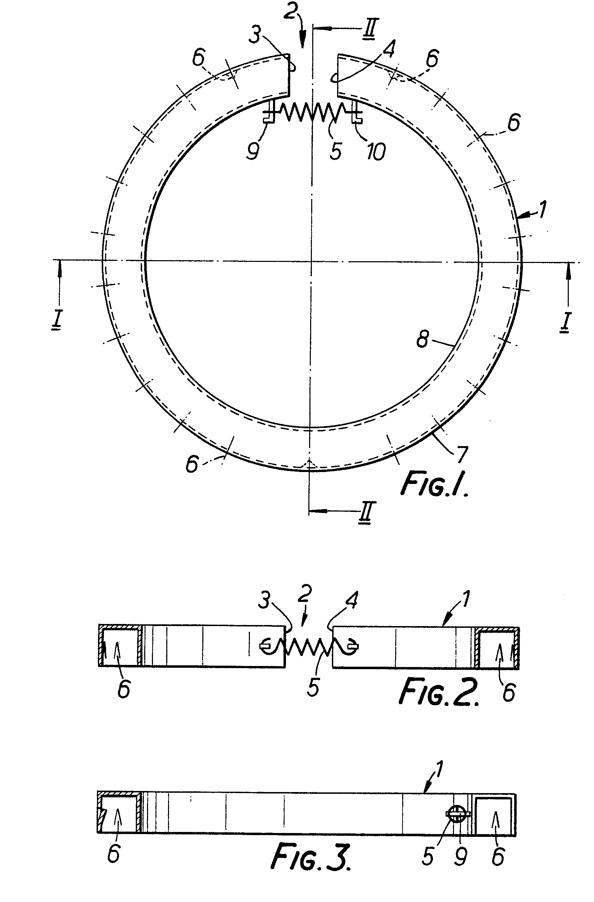

Figures 1, 2 and 3 show a first pipe protector having a substantially annular metallic member 1 which has a gap 2. The member 1 thus has two ends 3 and 4. The member is channel-shaped in cross section having a top wall and two side walls, the channel being right-angled as shown in the section views of Figures 2 and 3. The two ends 3 and 4 are drawn together by a clamp or heavy duty spring 5. The pipe protector is formed with two small projections 9, 10 one each side of the gap 2 and adjacent the gap. The clamp or spring 5 is then attached to the projections 9, 10. The outer wall of the annulus 7 has tangs formed on the inside surface at spaced intervals around the circumference. Instead of or in addition such tangs can also be present on the inside surface of the inner wall 8. Alternatively the tangs may be dimples or projections.

The pipe protector 1 can be fitted to an end of a length of pipe which is to be protected simply by one person without the need for complicated tools. The clamp or spring 5 is released and the pipe protector 1 fitted over the end of the pipe. If there is a bulky longitudinal weld in the pipe this can be readily accommodated by fitting the gap 2 over the weld.' The pipe protector can be driven into position over the end of the pipe and the clamp or spring then secured to draw the two ends of the annulus together.

As the pipe protector is fitted the tangs 6 bend in, tending to lie flat in line with the annular wall. This helps to ease the fitting of the pipe protector. Once in position the tangs open out to rest against the pipe wall helping to ensure a secure fit. The pipe can then be transported and the ends do not become damaged in transit. Accidental removal of the pipe protector is resisted by the tangs as any attempt to remove the pipe protector without first loosening the clamp tends to pull open the tang which is resisted the tang acting as a barb. Once the pipe has arrived at its destination the pipe protector can be easily removed by releasing the clamp and easing the protector off the end of the pipe.

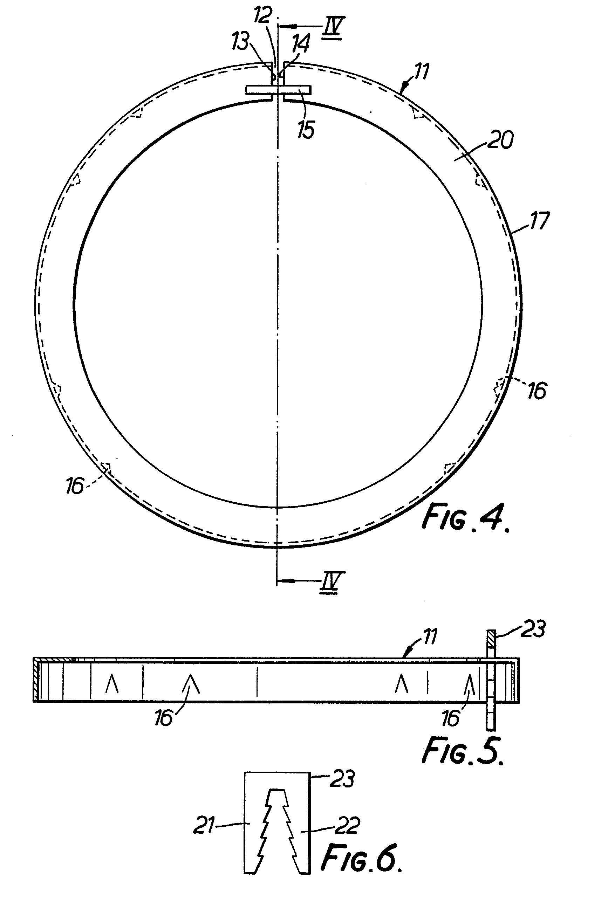

Figures 4, 5 and 6 show a second pipe protector which like the first pipe protector shown in Figures 1, 2 and 3 has a substantially annular metallic member 11 which has a gap 12 and two ends 13 and 14. The member

0100244

5.

is channel-shaped in cross section but has only one outer side wall 17 and a top wall 20 at right angles to one another. The pipe protector is located on the pipe outside diameter the top wall 20 forming an annular cap over the end of the pipe. The ends of the pipe protector 11 are drawn together by an inverted tooth wedge 15 (Figure 6). The two arms 21, 22 of the wedge fit into two slots (not shown) in the top wall 20. The inside of the arms 21, 22 are serrated forming teeth as shown in Figure 6 so that towards one end 23 of the wedge the gap between the inside of the arms progressively decreases. As the wedge is pushed further into the slots the serrated edges are progressively engaged so that the ends 13 and 14 of the protector are progressively pulled together more. Similarly to the first pipe protector shown in Figures 1, 2 and 3 there are tangs 16.

Such a second pipe protector is particularly suitable for a range of nominal bore pipes having a fixed outside diameter and a range of wall thicknesses.

6.

CLAIMS

1.    A pipe protector comprising a member having a top wall and at least one side wall adaptable to form a substantially annular member and means to hold the pipe protector in position on a pipe.

2.    A pipe protector as claimed in Claim 1 in which there is a small gap in the annular member and the means to hold the pipe protector in position comprises means to vary the distance between the ends of the annulus when fitted to the end of a pipe.

3.    A pipe protector as claimed in Claim 2 in which the means are a spring or toggle action clamp, an inverted tooth wedge or a wedge or cam action clamp.

4.    A pipe protector as claimed in Claim 1, 2 or 3 in which the means comprise means on at least one of the inner surfaces of the top wall or side wall to improve the resistance to removal of the pipe protector once it has been fitted to the pipe.

5.    A pipe protector as claimed in Claim 4 in which the means are in the form of tangs, punched protrusions or dimples.

6.    A pipe protector as claimed in Claim 4 or Claim 5 in which the means is a friction producing material which is bonded or otherwise secured to one or other or both of the walls.

0100244

1/2

Fig.1.

Fig.2.

Fig.3.

0100244

Fig.4.

Fig.5.

Fig.6.